# EUROPÄISCHE PATENTSCHRIFT

(11) **EP 1 086 835 B1**
(45) Veröffentlichungstag und Bekanntmachung des Hinweises auf die Patenterteilung: **20.10.2004**
(21) Anmeldenummer: 00116850.9
(22) Anmeldetag: 04.08.2000
(51) Int. Cl.: B60D 1/02

(54) **Anhängerkupplung**
Trailer coupling
Attelage de remorque

(30) Priorität: 22.09.1999 DE 29916695 U; 06.11.1999 DE 29919497 U; 26.01.2000 DE 20001259 U
(43) Veröffentlichungstag der Anmeldung: 28.03.2001
(73) Patentinhaber: Sauermann, Hans, 85119 Ernsgaden (DE)
(72) Erfinder: Sauermann, Hans, 85119 Ernsgaden (DE)
(74) Vertreter: Witzany, Manfred, Dipl.-Phys., Dr.

(56) Entgegenhaltungen:
- DE-A- 2 458 977
- DE-A- 2 817 240
- DE-A- 2 924 759
- DE-A- 3 016 247
- DE-U- 7 821 632

## Beschreibung

Die Erfindung betrifft eine Anhängerkupplung mit einem Kupplungsmaul und einem verschiebbar geführten Kuppelzapfen, der von einem Betätigungshebel bewegbar ist. Dieser Betätigungshebel ist in einem Schwenklager abgestützt, wobei er beim Verschwenken den Kuppelzapfen aus der Kuppelstellung in die Lösestellung verschiebt.

Aus der DT 24 58 977 A1 ist eine Anhängerkupplung bekannt mit einem Kupplungsmaul, mit einem zwischen einer zurückgezogenen Lösestellung und einer das Kupplungsmaul durchsetzenden Kuppelstellung verschiebbar geführten Kuppelzapfen, der von einem Betätigungshebel bewegbar ist, welcher in einem Schwenklager abgestützt ist, in eine seitliche Ausnehmung des Kuppelzapfens eingreift und eine Sperrfläche aufweist, die in der Kuppelstellung den Kuppelzapfen arretierend mit einer am Kuppelzapfen vorgesehenen Anlagefläche zusammenwirkt, und mit einem Sicherungsbolzen, der zwischen einer den Kuppelzapfen in dessen Kuppelstellung übergreifenden Sicherungslage und einer diesen freigebenden Entsperrlage quer zur Verschieberichtung des Kuppelzapfens verschiebbar im Kupplungskopf gehalten ist, wobei der Sicherungsbolzen von einer Feder in Richtung der Sicherungslage vorgespannt und vom Betätigungshebel in die Entsperrlage drückbar ist, bevor dieser den Kuppelzapfen verschiebt.

Der Erfindung liegt die Aufgabe zugrunde, eine Anhängerkupplung der eingangs genannten Art vorteilhaft weiterzubilden.

Diese Aufgabe wird erfindungsgemäß mit den Merkmalen der unabhängigen Ansprüche gelöst.

Die Anhängerkupplung gemäß Anspruch 1 zeichnet sich dadurch aus, daß der Betätigungshebel neben der Betätigungsfunktion zusätzlich eine doppelte Sperrfunktion für den Kuppelzapfen in dessen Kuppelstellung ausübt. Dazu weist der Betätigungshebel zwei Sperrflächen auf, die mit entsprechend ausgebildeten Anlageflächen des Kuppelzapfens zusammenwirken. Bei Anlage der Sperrflächen des Betätigungshebels an den Anlageflächen des Kuppelzapfens wird letzterer arretiert und kann somit nicht unbeabsichtigt in die Lösestellung gelangen. Da der Betätigungshebel gleichzeitig eine doppelte Sperrfunktion für den Kuppelzapfen ausübt, kann die Anhängerkupplung ohne aufwendigen Sicherungsbolzen, also mit relativ wenigen beweglichen Teilen und damit besonders kompakt realisiert werden, was insbesondere bei Anhängerkupplungen für kleinere Fahrzeuge wie Gabelstapler von Bedeutung ist. Trotz der damit realisierbaren kleinen Bauweise kann die Anhängerkupplung für beträchtliche Anhängerlasten ausgelegt werden. Um eine ungehinderte Bewegung des Betätigungshebels sicherzustellen, sind die Sperrflächen in etwa tangential zum Schwenklager des Betätigungshebels ausgerichtet. Damit kann der Betätigungshebel leicht von einer den Kuppelzapfen arretierenden Sperrstellung in eine den Kuppelzapfen freigebende Lösestellung verschwenkt werden. Zur Erhöhung der Sicherheit der Kuppelzapfenarretierung sind am Betätigungshebel wenigstens zwei Sperrflächen vorgesehen, die mit jeweils einer Anlagefläche des Kuppelzapfens zusammenwirken. Zwischen beiden Anlageflächen ist im Kuppelzapfen eine seitliche Ausnehmung vorgesehen, in die der Betätigungshebel zur Verstellung des Kuppelzapfens eingreift. Die beiden Anlageflächen des Kuppelzapfens sind demnach räumlich voneinander getrennt, was die Sicherheit der Arretierung des Kuppelzapfens in der Kuppelstellung weiter erhöht. Um eine sichere Sperrwirkung des Kuppelzapfens in der Kuppelstellung zu erzielen, bildet eine gedachte Linie zwischen dem Schwenklager des Betätigungshebels und der Sperrfläche mit der Kuppelzapfenlängserstreckung in der Kuppelstellung einen stumpfen Winkel. Versucht der Kuppelzapfen bei in der Sperrstellung befindlichem Betätigungshebel in die Lösestellung zu gelangen, so wird aufgrund dieses stumpfen Winkels der Betätigungshebel auf Stauchung belastet, so daß der Kuppelzapfen unbeweglich in der Kuppelstellung verbleibt.

Sind die Anlageflächen des Kuppelzapfens gemäß Anspruch 2 in der Kuppelstellung im wesentlichen tangential zum Schwenklager des Betätigungshebels ausgerichtet, so ergibt sich eine flächige Anlage der Sperrflächen des Betätigungshebels an den Anlageflächen des Kuppelzapfens. Dabei erhöht sich zum einen die Sperrwirkung des Kuppelzapfens, zum anderen verhindert die flächige Anlage des Kuppelzapfens an den Sperrflächen des Betätigungshebels ein Einkerben der aneinanderliegenden Flächen aufgrund von Stößen, die auf den Kuppelzapfen einwirken. Damit erhöht sich die Lebensdauer der Anhängerkupplung beträchtlich.

Gemäß Anspruch 3 liegen die Sperrflächen des Betätigungshebels bzw. die Anlageflächen des Kuppelzapfens - vom Schwenklager aus betrachtet - auf unterschiedlichen Radien, wodurch sich ein besonders platzsparender Aufbau der Anhängerkupplung ergibt. Vorzugsweise befindet sich die kupplungsmaulnahe Sperrfläche auf einem größeren Radius als die kupplungsmaulferne Sperrfläche, so daß die beiden Sperrflächen in etwa übereinander angeordnet sein können. Durch diese Anordnung der Sperrflächen kann der Kuppelzapfen sehr sicher vom Betätigungshebel ergriffen werden, wobei trotzdem eine ausreichende Arretierung des Kuppelzapfens in der Kuppelstellung gewährleistet ist.

Aufgrund der stumpfwinkeligen Anordnung des Betätigungshebels mit dem Kuppelzapfen in der Kuppelstellung muß der Betätigungshebel während der Verschiebung des Kuppelzapfens in die Lösestellung entsprechend tiefer in die seitliche Ausnehmung des Kuppelzapfens eindringen. Insbesondere bei in etwa fluchtend übereinander angeordneten Anlageflächen des Kuppelzapfens ist es gemäß Anspruch 4 vorteilhaft, wenn der Betätigungshebel eine Ausnehmung aufweist, in die der Abschnitt jenseits der Ausnehmung des Kuppelzapfens bei dessen Verschiebung eindringt. Damit ist ein ungestörter Bewegungsablauf des Betätigungshebels und des Kuppelzapfens von der Kuppelstellung in die Lösestellung gewährleistet.

Um den Kuppelzapfen auch in der Lösestellung sicher zu verriegeln, ist dem Betätigungshebel ein Sperrhebel zugeordnet. Dieser Sperrhebel ist ebenfalls schwenkbar gehalten und arretiert den Kuppelzapfen in der Lösestellung einerseits unmittelbar und andererseits mittelbar über eine Arretierung des Betätigungshebels. Damit ist auch in der Lösestellung eine doppelte Sicherung des Kuppelzapfens gegeben.

Zur mittelbaren Sicherung des Kuppelzapfens in der Lösestellung weist der Sperrhebel gemäß Anspruch 6 eine Stütznocke auf, die den Betätigungshebel in der Lösestellung des Kuppelzapfens arretiert. Vorzugsweise greift diese Stütznocke in eine entsprechend geformte Rastvertiefung des Betätigungshebels oder eines damit drehfest verbundenen Teils ein.

Die Ausbildung der Anhängerkupplung gemäß Anspruch 7 zeichnet sich durch einen erhöhten Bedienungskomfort aus. Dabei weist der Sperrhebel einen in das Kupplungsmaul ragenden Arm auf, der von einer eindringenden Kuppelöse verschwenkbar ist. Durch die Verschwenkung des Sperrhebels wird sowohl die direkte Sicherung des Kuppelzapfens wie auch dessen mittelbare Sicherung über den Betätigungshebel aufgehoben, so daß der Kuppelzapfen in die Kuppelstellung gebracht und dort verriegelt wird.

Damit der Sperrhebel den Kuppelzapfen sicher erfassen und verriegeln kann, weist dieser gemäß Anspruch 8 eine Ausklinkung auf, in die der Sperrhebel eingreift. Vorzugsweise ist diese Ausklinkung an die Form des eingreifenden Teils des Sperrhebels angepaßt.

Bei der Ausbildung der Anhängerkupplung gemäß Anspruch 9 wirkt der Sperrhebel in dessen Sperrstellung mit der Anlagefläche des Kuppelzapfens in dessen Kuppelstellung zusammen. Damit arretiert der Sperrhebel auch in der Kuppelstellung des Kuppelzapfens diesen unmittelbar über die Anlagefläche, so daß der Kuppelzapfen in der Kuppelstellung durch drei Sicherungsmaßnahmen gesichert ist. Ein ungewolltes Verschieben des Kuppelzapfens in die Lösestellung, beispielsweise während der Fahrt, ist daher zuverlässig ausgeschlossen.

Um die vorteilhafte Sicherungswirkung des Sperrhebels auf den Kuppelzapfen unter allen Umständen nutzen zu können, wird der Sperrhebel gemäß Anspruch 10 in dessen Sperrstellung festgelegt. Diese Festlegung muß jedoch lösbar sein, um den Kuppelzapfen mit Hilfe des Betätigungshebels wieder in die Lösestellung bringen zu können. Beispielsweise könnte der Sperrhebel eine Vertiefung oder Durchbohrung aufweisen, in die ein im Kupplungsgehäuse gelagerter Stift eindringen kann, wenn sich der Sperrhebel in der Sperrstellung befindet.

Gemäß Anspruch 11 ist es günstig, wenn der Betätigungs- und Sperrhebel jeweils zwangsverstellbar ist. Dadurch kann der Sperrhebel bewußt in die Sperrstellung bzw. eine den Kuppelzapfen freigebende Stellung gebracht werden, um anschließend den Kuppelzapfen durch Verschwenken des Betätigungshebels in die Lösestellung zu bringen.

Schließlich ist es gemäß Anspruch 12 vorteilhaft, den Betätigungs- und Sperrhebel durch einen gemeinsamen Handgriff zu verschwenken. Damit kann der Kuppelzapfen einfach mittels Einhandbedienung aus der Lösestellung gebracht werden. Für den Fall, daß der Sperrhebel den Kuppelzapfen unmittelbar verriegelt, muß jedoch der Sperrhebel zunächst in eine Entriegelungsstellung gebracht werden, bevor der Kuppelzapfen aus der Lösestellung verschoben werden kann. Hierzu wird vorgeschlagen, daß der Betätigungshebel über einen Freilauf mit dem Handgriff verbunden ist, so daß der Betätigungshebel im Bereich des Freilaufwinkels vom Handgriff entkoppelt ist. Innerhalb dieses Freilaufwinkels wird der Sperrhebei in die Entriegelungsstellung verschwenkt, so daß dessen Sperrwirkung aufgehoben ist. Erst nach Überschreiten des Freilaufwinkels wird der Betätigungshebel vom Handgriff verschwenkt, so daß die Sperrwirkung des Betätigungshebels aufgehoben und der Kuppelzapfen aus der Lösestellung verschoben wird.

Eine andere Lösung der erfindungsgemäßen Aufgabe schlägt vor, daß die Anhängerkupplung gemäß Anspruch 13 einen Sicherungsbolzen aufweist, der quer zur Verschieberichtung des Kuppelzapfens verschiebbar gehalten ist. Der Sicherungsbolzen übergreift in einer Sicherungslage den Kuppelzapfen und sichert ihn damit in der Kuppelstellung. Der Sicherungsbolzen ist in eine Entsperrlage verschiebbar, in der er den Kuppelzapfen freigibt, so daß dieser in die Lösestellung bringbar ist. Der Sicherungsbolzen ist mittels einer Feder in Richtung der Sicherungslage vorgespannt, so daß er ohne weitere Betätigung den Kuppelzapfen sichert. Um den Sicherungsbolzen in die Entsperrlage zu bringen, wird der Betätigungshebel verstellt, so daß dieser gegen den Sicherungsbolzen drückt und ihn entgegen der Federspannkraft verschiebt. Dabei gleitet der Betätigungshebel entlang einer Führungslinie über den Sicherungsbolzen, wobei der Winkel zwischen der Führungslinie und der Verstellrichtung des Betätigungshebels stets kleiner als vorzugsweise 45° ist. Diese Führungslinie verläuft gekrümmt und weist insbesondere zwischen der Sicherungs- und Entsperrlage einen Wendepunkt mit maximalem Winkel zwischen der Führungslinie und der Verstellrichtung des Betätigungshebels auf. Durch diese überraschend einfache Maßnahme wird erreicht, daß der Sicherungsbolzen auf den Betätigungshebel im Bereich des Wendepunktes der Führungslinie einen erhöhten Widerstand ausübt, der sich bei weiterer Verstellung des Betätigungshebels wieder entsprechend reduziert. Anhand dieses spürbaren Widerstandes kann die bedienende Person sehr einfach erkennen, daß der Kuppelzapfen entriegelt ist. Insbesondere muß die bedienende Person hierzu nicht die Kupplung betrachten, so daß die Kupplung auch von unaufmerksamen Personen korrekt bedient wird. Insbesondere prägt sich die variierende Bedienungskraft des Betätigungshebels bei der bedienenden Person gut ein, so daß, eine nicht korrekte Bedienung der Kupplung sofort und zuverlässig erkannt wird. Diese zusätzliche Überwachungsfunktion des Sicherungsbolzens wird lediglich durch dessen besondere Formgebung erreicht, so daß sich die Kupplung durch diese Maßnahme praktisch nicht verteuert.

Insbesondere in jenen Fällen, in denen der Betätigungshebel den Kuppelzapfen mittig faßt, kann der Betätigungshebel den Sicherungsbolzen nicht vollständig aus dem Bereich des Kuppelzapfens zurückdrücken. Der Kuppelzapfen stößt demnach bei dessen Bewegung gegen den teilweise zurückgedrückten Sicherungsbolzen, wobei im Gegensatz zur Sicherungslage der Sicherungsbolzen aufgrund seiner Lage durch den Kuppelzapfen zurückdrückbar ist. Um in diesem Fall das Zurückdrücken des Sicherungsbolzens durch den Kuppelzapfen zu erleichtern, weist der Kuppelzapfen gemäß Anspruch 14 eine Schräg- oder Konusfläche auf, die entweder gegen die Sperrfläche oder gegen die Führungslinie des Sicherungsbolzens drückt. Damit wird bei weiterer Verschiebung des Kuppelzapfens der Sicherungsbolzen so weit zurückgedrückt, daß der Kuppelzapfen am Sicherungsbolzen vorbeigleiten kann.

Zur Verhinderung eines Verkantens des Sicherungsbolzens am Betätigungshebel weist der Sicherungsbolzen gemäß Anspruch 15 eine zentrale Rundung auf, die in der Entsperrlage am Betätigungshebel anliegt. Der Sicherungsbolzen übt daher keinerlei Kerbwirkung auf den Betätigungshebel aus, die die Funktionstüchtigkeit der Anhängerkupplung beeinträchtigen könnte.

Zur Vereinfachung der Herstellung des Sicherungsbolzens ist dieser gemäß Anspruch 16 rotationssymmetrisch ausgebildet. Der Sicherungsbolzen ist daher ein einfaches Drehteil, das einfach einstückig gefertigt werden kann. Der Sicherungsbolzen ist in diesem Fall in einer Bohrung des Kupplungskopfes gehalten, die ebenfalls einfach herzustellen ist.

Um eine wirksame Sperrung des Kuppelzapfens in der Kuppelstellung zu erreichen, weist der Sicherungsbolzen gemäß Anspruch 17 eine Sperrfläche auf, die im wesentlichen quer zur Verschieberichtung des Kuppelzapfens ausgerichtet ist. Diese Sperrfläche verhindert zuverlässig eine Verschiebung des Kuppelzapfens in die Lösestellung, wenn der Betätigungshebel nicht entsprechend verstellt wurde. Damit ist eine Verstellung des Kuppelzapfens in die Lösestellung während der Fahrt ausgeschlossen.

Zur Verminderung der Reibung zwischen dem Betätigungshebel und dem Sicherungsbolzen ist die Anlagefläche des Betätigungshebels gemäß Anspruch 18 als Fase oder Rundung ausgebildet. Außerdem wird durch diese Maßnahme eine Kerbwirkung des Betätigungshebels auf den Sicherungsbolzen und damit eine Veränderung der Führungslinie während des Betriebs der Anhängerkupplung vermieden.

Alternativ kann der Betätigungshebel gemäß Anspruch 19 auch mindestens eine drehbare Rolle aufweisen, die den Sicherungsbolzen erfaßt. Damit ergibt sich statt einer gleitenden eine rollende Bewegung zwischen dem Betätigungshebel und dem Sicherungsbolzen, so daß die Reibung zwischen beiden Teilen entsprechend reduziert ist.

Um den Anlagedruck des Betätigungshebels am Sicherungsbolzen möglichst klein zu halten, ist der Betätigungshebel gemäß Anspruch 20 im Anlagebereich am Sicherungsbolzen an diesen angepaßt. Insbesondere bei rotationssymmetrischem Sicherungsbolzen ist der Betätigungshebel im Anlagebereich am Sicherungsbolzen kreisbogenförmig ausgebildet und bietet demnach eine entsprechend größere Anlagefläche.

In der Sicherungslage des Sicherungsbolzens befindet sich dieser oberhalb des Kuppelzapfens. Um den Sicherungsbolzen einfach in die Entsperrlage zu überführen, ist es gemäß Anspruch 21 vorteilhaft, wenn der Betätigungshebel einen Arm aufweist, der den Kuppelzapfen übergreift. Dieser Arm behindert die Bewegung des Kuppelzapfens in keiner Weise, da er zusammen mit dem Kuppelzapfen verstellt wird.

Der Erfindungsgegenstand wird beispielhaft anhand der Zeichnung beschrieben, ohne den Schutzbereich zu begrenzen. Es zeigt:
- Figur 1: eine teilweise geschnittene Darstellung einer Anhängerkupplung in der Lösestellung des Kuppelzapfens,
- Figur 2: die Anhängerkupplung gemäß Figur 1 unmittelbar nach dem Eindringen einer Kuppelöse,
- Figur 3: die Anhängerkupplung gemäß Figur 2 in der Kuppelstellung des Kuppelzapfens und in der Sperrstellung des Sperrhebels,
- Figur 4: die Anhängerkupplung gemäß Figur 3 in der Kuppelstellung des Kuppelzapfens und in der Freigabestellung des Sperrhebels,
- Figur 5: eine teilweise geschnittene Darstellung einer anderen Anhängerkupplung,
- Figur 6: eine zugeordnete Schnittdarstellung entlang der Schnittlinie VI-VI der Figur 5,
- Figur 7: eine vergrößerte Darstellung eines Sicherungsbolzens mit einem Betätigungshebel,
- Figur 8: eine Schnittdarstellung einer ersten alternativen Ausführungsform des Betätigungshebels und
- Figur 9: eine Darstellung einer zweiten alternativen Ausführungsform des Betätigungshebels.

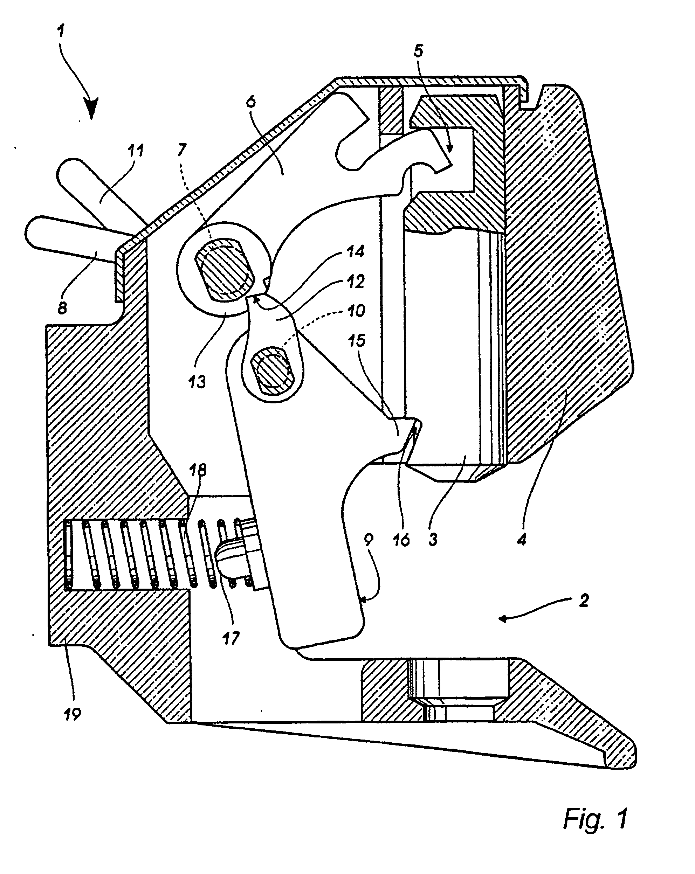

Figur 1 zeigt eine Anhängerkupplung 1 mit einem Kupplungsmaul 2 und einem Kuppelzapfen 3. Der Kuppelzapfen 3 befindet sich in der Lösestellung, in der er in ein Kupplungsgehäuse 4 zurückgezogen ist.

Der Kuppelzapfen 3 weist eine seitliche Ausnehmung 5 auf, in die ein den Kuppelzapfen 3 verschiebender Betätigungshebel 6 eingreift. Der Betätigungshebel 6 ist in einem Drehlager 7 schwenkbar abgestützt und mittels eines Handgriffs 8 zwangsverstellbar.

Um den Betätigungshebel 6 in der in Figur 1 dargestellten Lösestellung zu halten, ist ein Sperrhebel 9 vorgesehen, der ebenfalls in einem Drehlager 10 schwenkbar abgestützt und mittels eines Handgriffs 11 zwangsverstellbar ist. Dieser Sperrhebel 9 ist mit einer Stütznocke 12 drehfest verbunden, die mit einem Ring 13 des Betätigungshebels 6 zusammenwirkt. Dieser Ring 13 ist mit dem Betätigungshebel 6 drehfest verbunden und weist eine Rastvertiefung 14 auf, in die die Stütznocke 12 in der Lösestellung des Kuppelzapfens 3 eindringt. Damit hält die Stütznocke 12 den Betätigungshebel 6 in der Lösestellung.

Um den Kuppelzapfen 3 sicher in der Lösestellung zu verriegeln, greift der Sperrhebel 9 mit einem Arm 15 in eine Ausklinkung 16 des Kuppelzapfens 3 ein. Damit stützt der Sperrhebel 9 den Kuppelzapfen 3 einerseits unmittelbar über den Arm 15 und andererseits mittelbar über die Stütznocke 12, den Ring 13 und den Betätigungshebel 6.

Der Arm 9 weist eine Aufnahme 17 für eine Feder 18 auf, die in einem Kupplungsschaft 19 festgelegt ist. Durch diese Feder 18 wird der Sperrhebel 9 mit seinem Arm 15 gegen den Kuppelzapfen 3 gedrückt und verbleibt in der dargestellten Stellung.

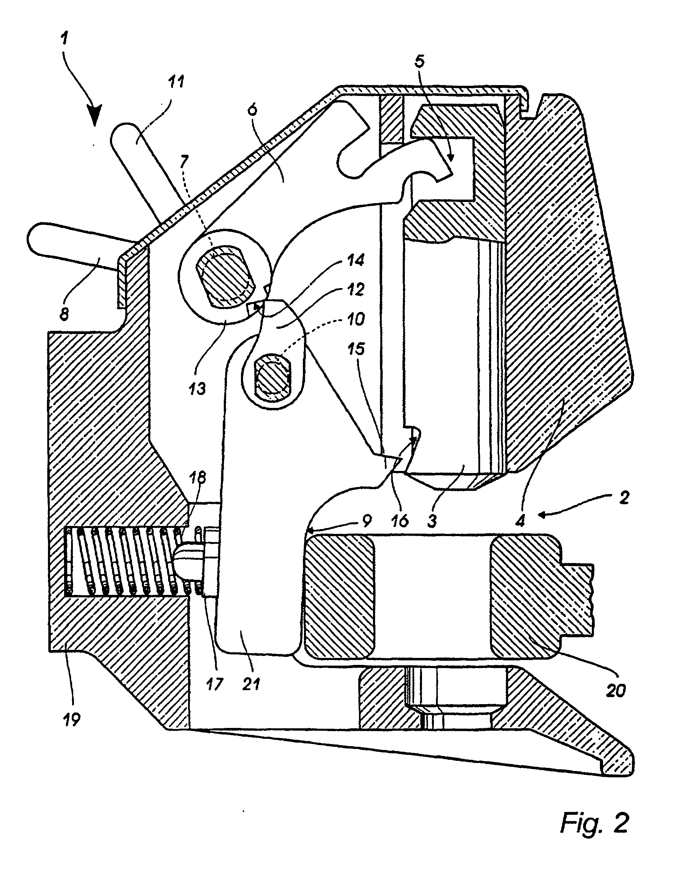

In Figur 2 ist die Anhängerkupplung 1 gemäß Figur 1 dargestellt, wobei gleiche Bezugszeichen gleiche Teile benennen. Eine Kuppelöse 20 ist in das Kupplungsmaul 2 eingedrungen und verschwenkt einen in das Kupplungsmaul 2 ragenden Tastarm 21 des Sperrhebels 9 im Uhrzeigersinn, wodurch die Stütznocke 12 mitverschwenkt wird. Dadurch wird die Arretierung des Betätigungshebels 6 aufgehoben, so daß dieser frei verschwenkbar ist.

Außerdem wird der Arm 15 des Sperrhebels 9 aus der Ausklinkung 16 des Kuppelzapfens 3 zurückgezogen, so daß der Kuppelzapfen 3 frei verschiebbar gehalten ist. Durch eine nicht dargestellte Feder, die im Bereich des Schwenklagers 7 am Betätigungshebel 6 angreift, wird der Betätigungshebel 6 im Uhrzeigersinn verschwenkt, so daß der Kuppelzapfen 3 in die Kuppelstellung verschoben wird.

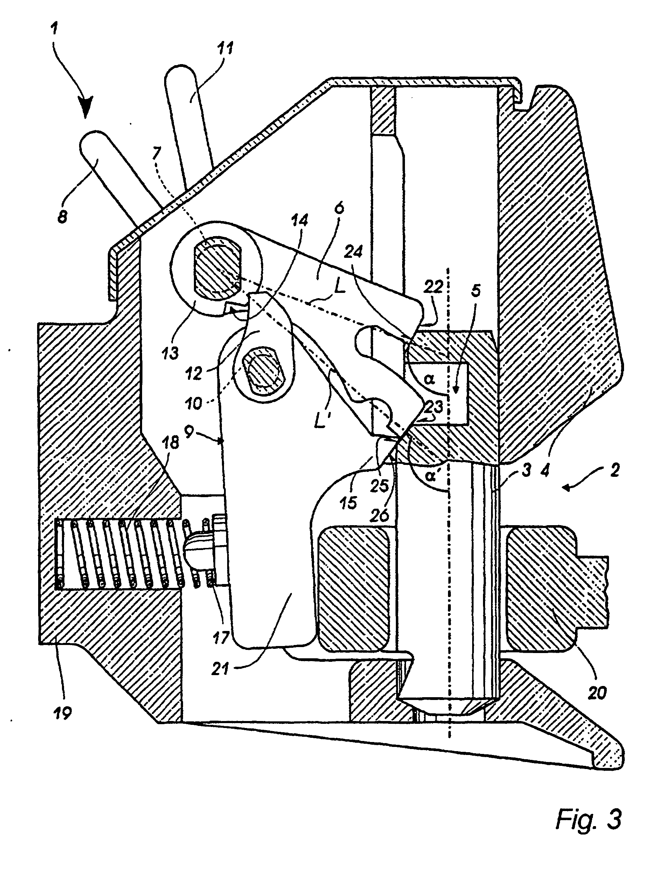

In der in Figur 3 dargestellten Kuppelstellung des Kuppelzapfens 3 wird dieser vom Betätigungshebel 6 verriegelt. Der Betätigungshebel 6 weist hierzu Sperrflächen 22, 23 auf, die mit Anlageflächen 24, 25 des Kuppelzapfens 3 zusammenwirken. Diese Sperrflächen 22, 23 sind tangential zum Schwenklager 7 ausgerichtet, um ein ungehindertes Verschwenken des Betätigungshebels 6 zu ermöglichen. Die Anlageflächen 24, 25 des Kuppelzapfens 3 sind entsprechend zu den Sperrflächen 22, 23 geformt, um eine flächige Anlage der Sperrflächen 22, 23 an den Anlageflächen 24, 25 zu gewährleisten.

Da sich das Drehlager 7 des Betätigungshebels 6 in der Kuppelstellung oberhalb der Sperrflächen 22, 23 befindet, bilden gedachte Linien L, L' zwischen dem Schwenklager 7 und den Sperrflächen 22, 23 mit dem Kuppelzapfen 3 stumpfe Winkel α, α'. Damit müßte der Betätigungshebel 6 bei einer unbeabsichtigten Nach-Oben-Bewegung des Kuppelzapfens 3 in Längsrichtung gestaucht werden, so daß der Kuppelzapfen 3 durch den Betätigungshebel 6 verriegelt ist.

Der Einsatz zweier Sperrflächen 22, 23, die jeweils mit unterschiedlichen Anlageflächen 24, 25 zusammenwirken, verbessert die Sicherheit der Verriegelung des Kuppelzapfens 3. Die beiden Anlageflächen 24, 25 des Kuppelzapfens 3 sind in etwa fluchtend übereinander angeordnet, so daß die obere Anlagefläche 24 näher am Drehlager 7 zu liegen kommt als die untere Anlagefläche 25. Entsprechend befindet sich die obere Sperrfläche 22 des Betätigungshebels 6 auf einem kleineren Radius als die untere Sperrfläche 23.

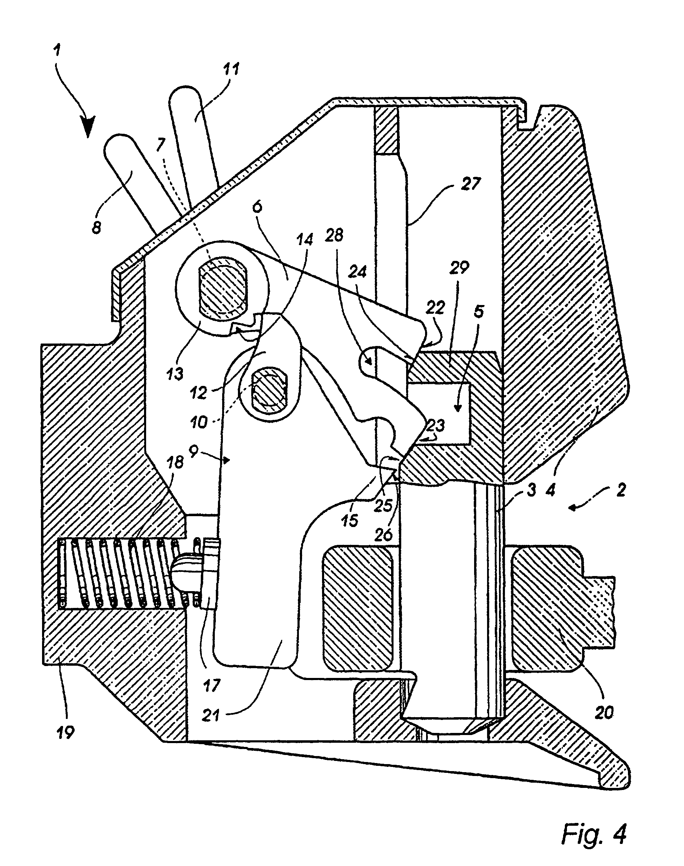

Um die Sicherheit der Verriegelung des Kuppelzapfens 3 in der Kuppelstellung weiter zu erhöhen, weist der Sperrhebel 9 an seinem Arm 15 ebenfalls eine Sperrfläche 26 auf, die mit der unteren Anlagefläche 25 des Kuppelzapfens 3 zusammenwirkt. Damit wird der Kuppelzapfen 3 in der Kuppelstellung sowohl von den beiden Sperrflächen 22, 23 des Betätigungshebels 6, wie auch von der Sperrfläche 26 des Sperrhebels 9 verriegelt. Eine unbeabsichtigte Verschiebung des Kuppelzapfens 3 in die Lösestellung ist daher ausgeschlossen. Der Sperrhebel 9 wird während der Fahrt in der in Figur 3 dargestellten Sperrlage arretiert, um ein unbeabsichtigtes Verschwenken des Sperrhebels 9 in die in Figur 4 dargestellte Freigabelage zu verhindern.

Figur 4 zeigt die Kupplung gemäß Figur 3, wobei der Sperrhebel 9 durch Betätigung des Handgriffs 11 im Uhrzeigersinn verschwenkt wurde, um die Verriegelung des Kuppelzapfens 3 aufzuheben. Durch Verschwenken des Betätigungshebels 6 mittels des Handgriffs 8 wird der Kuppelzapfen 3 entlang einer Führung 27 in die in Figur 1 dargestellte Lösestellung verschoben. Um eine ungehinderte Bewegung des Betätigungshebels 6 zu gewährleisten, weist dieser zwischen den Sperrflächen 22 und 23 eine Aussparung 28 auf, in die ein Bereich 29 des Kuppelzapfens 3 jenseits der Ausnehmung 5 eindringen kann. Bei der Nach- -Oben-Bewegung des Kuppelzapfens 3 dringt somit die obere Anlagefläche 24 teilweise in die Aussparung 28 des Betätigungshebels 6 ein.

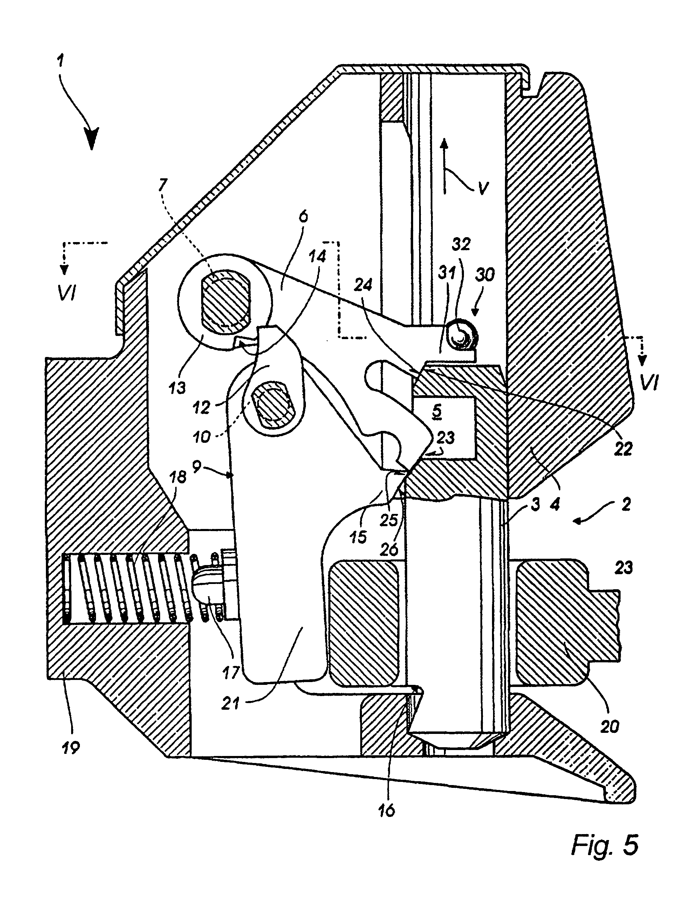

Figur 5 zeigt eine andere Anhängerkupplung 1 mit einem Kupplungsmaul 2, in dem ein Kuppelzapfen 3 in Richtung V verschiebbar gehalten ist. Der Kuppelzapfen 3 befindet sich in der Darstellung gemäß Figur 5 in der Kuppelstellung, in der er das Kupplungsmaul 2 durchsetzt. Der Kuppelzapfen 3 ist aus der Kuppelstellung in eine nicht dargestellte Lösestellung überführbar, in der er in den Kupplungskopf 4 zurückgezogen ist.

Der Kuppelzapfen 3 weist eine seitliche Ausnehmung 5 auf, in die ein Betätigungshebel 6 eingreift, mit dessen Hilfe der Kuppelzapfen 3 verschoben wird. Der Betätigungshebel 6 ist in einem Drehlager 7 schwenkbar abgestützt und mittels eines Handgriffs 8 verstellbar.

Dem Betätigungshebel 6 ist ein Sperrhebel 9 zugeordnet, der in einem Drehlager 10 schwenkbar abgestützt ist. Der Sperrhebel 9 weist eine Stütznocke 12 auf, die mit einem Ring 13 des Betätigungshebels 6 zusammenwirkt. In diesem Ring 13 ist eine Rastvertiefung 14 vorgesehen, in die in der nicht dargestellten Lösestellung des Kuppelzapfens 3 die Stütznocke 12 eindringt und den Betätigungsarm 6 verriegelt. Zusätzlich greift in der Lösestellung ein Arm 15 des Sperrhebels 9 in eine Ausklinkung 16 des Kuppelzapfens 3 ein, so daß der Kuppelzapfen 3 in der Lösestellung doppelt gesichert ist.

Der Arm 9 weist eine Aufnahme 17 für eine Feder 18 auf, die in einem Kupplungsschaft 19 festgelegt ist. Diese Feder 18 drückt den Arm 15 gegen den Kuppelzapfen 3, um diesen zu arretieren.

Dringt in das Kupplungsmaul 2 eine Kuppelöse 20 ein, so wird der Sperrhebel 9 im Uhrzeigersinn verschwenkt, wodurch die Stütznocke 12 außer Eingriff mit der Rastvertiefung 14 gerät und der Betätigungshebel 6 im Uhrzeigersinn verschwenkt wird. Der Kuppelzapfen 3 wird daher in die in Figur 5 dargestellte Kuppelstellung verschoben.

Zur Arretierung des Kuppelzapfens 3 in der dargestellten Kuppelstellung weist der Betätigungshebel 6 Sperrflächen 22, 23 auf, die mit Anlageflächen 24, 25 des Kuppelzapfens 3 zusammenwirken. Diese Sperrflächen 22, 23 sind tangential zum Schwenklager 7 des Betätigungshebels 6 ausgerichtet, um ein ungehindertes Schwenken des Betätigungshebels 6 zu ermöglichen. Versucht der Kuppelzapfen 3 sich nach oben zu verschieben, so drückt er lediglich gegen die Sperrflächen 22, 23 des Betätigungshebels 6, ohne die Kuppelstellung zu verlassen. Der Kuppelzapfen 3 ist daher in der Kuppelstellung verriegelt. Zur Erhöhung der Sicherheit der Verriegelung des Kuppelzapfens 3 in der Kuppelstellung weist der Sperrhebel 9 an seinem Arm 15 ebenfalls eine Sperrfläche 26 auf, die mit der unteren Anlagefläche 25 des Kuppelzapfens 3 zusammenwirkt.

Zur weiteren Verbesserung der Sicherung des Kuppelzapfens 3 in der Kuppelstellung ist ein Sicherungsbolzen 30 vorgesehen. Dieser Sicherungsbolzen 30 ist im Kupplungskopf 4 gehalten und senkrecht zur Bildebene gemäß Figur 5 verschiebbar. Der Sicherungsbolzen 30 übergreift den Kuppelzapfen 3, so daß dieser nicht versehentlich in die Lösestellung geraten kann.

Der Sicherungsbolzen 30 ist rotationssymmetrisch ausgebildet und wirkt mit einem Arm 31 des Betätigungshebels 6 zusammen. Zur Anpassung an die rotationssymmetrische Ausbildung des Sicherungsbolzens 30 weist der Arm 31 eine Rundung 32 auf, mit der er am Sicherungsbolzen 30 entlanggleitet.

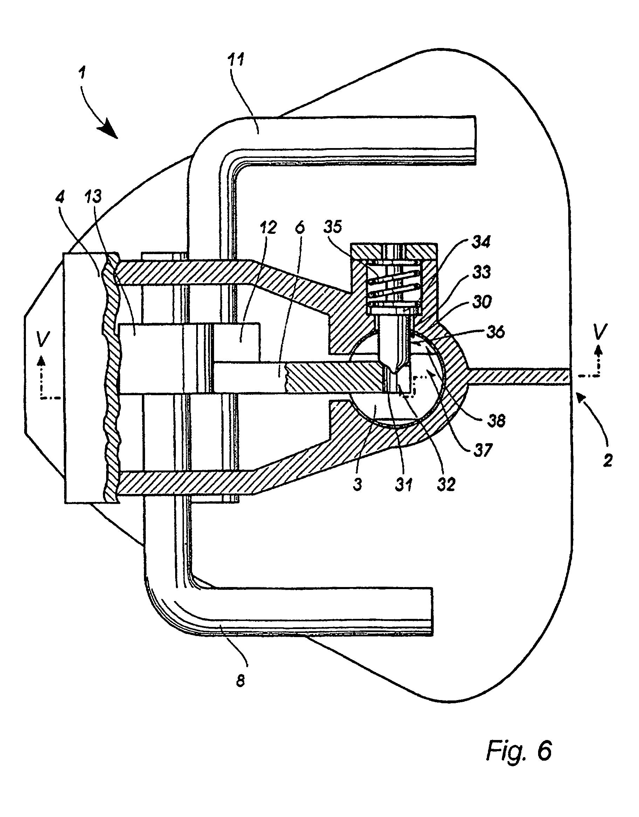

Figur 6 zeigt eine zugeordnete Schnittdarstellung der Anhängerkupplung gemäß Figur 5 entlang der Schnittlinie VI-VI, wobei gleiche Bezugszeichen gleiche Teile benennen. Der Sicherungsbolzen 30 ist in einer Bohrung 33 des Kupplungskopfes 4 gehalten. Der Sicherungsbolzen 30 weist einen im Durchmesser vergrößerten Ring 34 auf, der größer als die Bohrung 33 ist. Durch den Ring 34 ergibt sich ein Anschlag für den Sicherungsbolzen 30, der dessen Bewegung einseitig begrenzt. Gegen den Ring 34 drückt eine Feder 35, die an der Wandung des Kupplungskopfes 4 abgestützt ist. Diese Feder 35 drückt den Sicherungsbolzen 30 in die in Figur 6 dargestellte Sicherungslage. In dieser Lage übergreift der Sicherungsbolzen 30 mit einer zylindrischen Sperrfläche 36 den Kuppelzapfen 3, so daß eine Verschiebung des Kuppelzapfens 3 ausgeschlossen ist.

Um den Kuppelzapfen 3 in die Läsestellung überführen zu können, muß zunächst der Sicherungsbolzen 30 zurückgedrückt werden. Hierzu wird der Betätigungshebel 6 verschwenkt, so daß sein Arm 31 gegen den Sicherungsbolzen 30 drückt und diesen entgegen der Kraft der Feder 35 zurückdrückt. Sobald der Sicherungsbolzen 30 so weit zurückgedrückt ist, daß die zylindrische Sperrfläche 36 außer Eingriff mit einer horizontalen Anlagefläche 37 des Kuppelzapfens gerät, befindet sich der Sicherungsbolzen 30 in seiner Entsperrlage, in der der Kuppelzapfen 3 den Sicherungsbolzen 30 mittels einer Schrägfläche 38 selbst zurückdrücken kann.

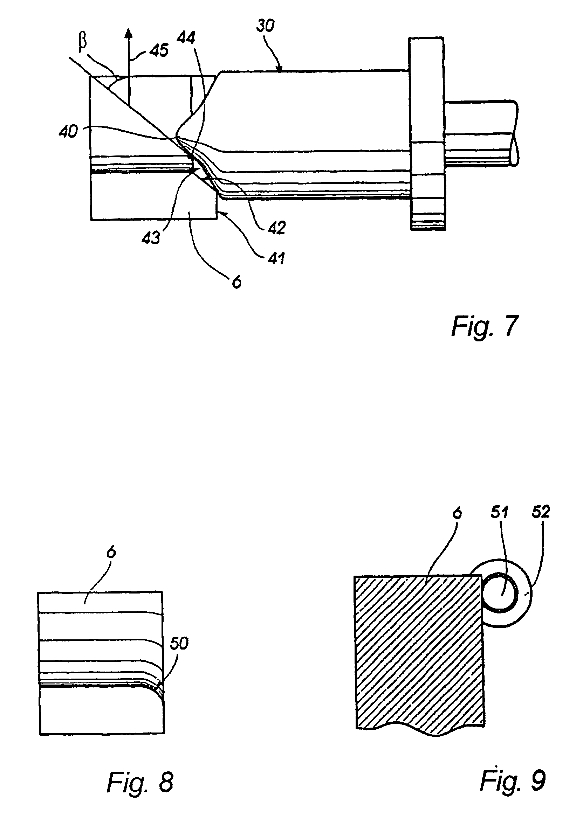

Der Sicherungsbolzen 30 ist nockenartig ausgebildet, was insbesondere aus der Detaildarstellung gemäß Figur 7 hervorgeht. Der Sicherungsbolzen 30 weist eine zentrale Rundung 40 auf, mit der er in entsperrter Lage an einer Seitenfläche 41 des Betätigungshebels 6 anliegt.

Der Betätigungshebel 6 ist in Richtung 45 verstellbar und weist außerdem eine Fase 42 auf, die eine Anlagefläche für den Sicherungsbolzen 30 bildet. Beim Verschwenken des Betätigungshebels 6 bewegt sich dessen Arm 31 im wesentlichen nach oben in Richtung 45, so daß die Fase 42 an einer Führungslinie 43 am Sicherungsbolzen 30 entlanggleitet.

Diese Führungslinie 43 weist einen Wendepunkt 44 auf, in dem ein Winkel β zwischen der Führungslinie 43 und der Verstellrichtung 45 des Betätigungshebels 6 maximal wird. Der Winkel β beträgt in der Sicherungsstellung ca. 30° und nimmt bei der Verstellung des Betätigungshebels 6 zunächst zu, bis er im Wendepunkt 44 mit ca. 45° sein Maximum erreicht, von wo ab er wieder abnimmt. Dieser Winkel β bestimmt die Kraftübersetzung zwischen dem Betätigungshebel 6 und dem Sicherungsbolzen 30, der von der Feder 35 belastet ist. Beim Verstellen des Betätigungshebels 6 ergibt sich demnach eine allmählich zunehmende Kraft, die nach Überschreitung des Wendepunktes 44 wieder abnimmt.

Für die bedienende Person ergibt sich damit ein deutlich spürbarer Rastpunkt, bei dessen Überschreitung der Kuppelzapfen 3 entsperrt wird. Die bedienende Person muß dabei nicht auf die Kupplung sehen, sondern sie kann dies allein anhand des Kraftverlaufs am Handhebel 8 spüren.

Alternativ zu der in Figur 7 dargestellten Ausbildung des Betätigungshebels 6 mit einer Fase 42 kann dieser gemäß Figur 8 auch mit einer Rundung 50 ausgestattet sein.

Als weitere Alternative ist es gemäß Figur 9 auch vorstellbar, am Betätigungshebel 6 eine Achse 51 zu halten, an der eine Rolle 52 drehbar gehalten ist. Diese Rolle 52 wälzt sich an der Führungskurve 43 des Sicherungsbolzens 30 ab, ohne daran zu gleiten. Dies reduziert die Reibung zwischen beiden Teilen und damit den erforderlichen Kraftaufwand. Außerdem wird der Sicherungsbolzen 30 aufgrund der rollenden Anlage der Rolle 52 wesentlich weniger belastet und ist demnach einem geringeren Verschleiß unterworfen.

## Patentansprüche

1. Anhängerkupplung mit einem Kupplungsmaul (2) und einem zwischen einer zurückgezogenen Lösestellung und einer das Kupplungsmaul (2) durchsetzenden Kuppelstellung verschiebbar geführten Kuppelzapfen (3), der von einem Betätigungshebel (6) bewegbar ist, welcher in einem Schwenklager (7) abgestützt ist, in eine seitliche Ausnehmung (5) des Kuppelzapfens (3) eingreift und eine Sperrfläche (23) aufweist, die in der Kuppelstellung den Kuppelzapfen (3) arretierend mit einer am Kuppelzapfen (3) vorgesehenen Anlagefläche (25) zusammenwirkt, **dadurch gekennzeichnet, daß** der Betätigungshebel (6) eine weitere Sperrfläche (22) aufweist, die in der Kuppelstellung den Kuppelzapfen (3) arretierend mit einer auf der anderen Seite der Aussparung (5) am Kuppelzapfen (3) vorgesehenen Anlagefläche (24) zusammenwirkt, wobei die Sperrflächen (22, 23) im wesentlichen tangential zum Schwenklager (7) des Betätigungshebels (6) ausgerichtet sind und in der Kuppelstellung eine gedachte Linie (L) zwischen dem Schwenklager (7) des Betätigungshebels (6) und dessen Sperrfläche (22, 23) mit dem Kuppelzapfen (3) einen stumpfen Winkel (α) einschließt.

2. Anhängerkupplung nach Anspruch 1, **dadurch gekennzeichnet, daß** die mit den Sperrflächen (22, 23) zusammenwirkenden Anlageflächen (24, 25) des Kuppelzapfens (3) in der Kuppelstellung im wesentlichen tangential zum Schwenklager (7) des Betätigungshebels (6) ausgerichtet sind.

3. Anhängerkupplung nach Anspruch 1 oder 2, **dadurch gekennzeichnet, daß** die Sperrflächen (22, 23) und/oder die Anlageflächen (24, 25) vom Schwenklager (7) des Betätigungshebels (6) unterschiedlich beabstandet sind.

4. Anhängerkupplung nach mindestens einem der Ansprüche 1 bis 3, **dadurch gekennzeichnet, daß** der Betätigungshebel (6) eine Aussparung (28) aufweist, in die ein Bereich (29) jenseits der seitlichen Ausnehmung (5) des Kuppelzapfens (3) bei dessen Verschiebung eingreift.

5. Anhängerkupplung nach mindestens einem der Ansprüche 1 bis 4, **dadurch gekennzeichnet, daß** dem Betätigungshebel (6) ein schwenkbar gehaltener Sperrhebel (9) zugeordnet ist, der in der Lösestellung den Kuppelzapfen (3) unmittelbar und mittelbar über den Betätigungshebel (6) verriegelt.

6. Anhängerkupplung nach Anspruch 5, **dadurch gekennzeichnet, daß** der Sperrhebel (9) eine Stütznocke (12) aufweist, die den Betätigungshebel (6) in der Lösestellung des Kuppelzapfens (3) arretiert.

7. Anhängerkupplung nach Anspruch 5 oder 6, **dadurch gekennzeichnet, daß** der Sperrhebel (9) einen in das Kupplungsmaul (2) ragenden Arm (15) aufweist und von einer darin eindringenden Kuppelöse (20) verschwenkbar ist und dabei die direkte und indirekte Verriegelung des Kuppelzapfens (3) aufhebt.

8. Anhängerkupplung nach mindestens einem der Ansprüche 5 bis 7, **dadurch gekennzeichnet, daß** der Kuppelzapfen (3) eine Ausklinkung (16) aufweist, in die der Sperrhebel zur Verriegelung des Kuppelzapfens (3) in dessen Lösestellung eingreift.

9. Anhängerkupplung nach mindestens einem der Ansprüche 5 bis 8, **dadurch gekennzeichnet, daß** der Sperrhebel (9) in einer Sperrstellung mit einer der Anlageflächen (24, 25) des Kuppelzapfens (3) in dessen Kuppelstellung zusammenwirkt.

10. Anhängerkupplung nach Anspruch 9, **dadurch gekennzeichnet, daß** der Sperrhebel (9) in der Sperrstellung festlegbar ist.

11. Anhängerkupplung nach mindestens einem der Ansprüche 5 bis 10, **dadurch gekennzeichnet, daß** der Betätigungs- (6) und der Sperrhebel (9) zwangsverstellbar ist.

12. Anhängerkupplung nach Anspruch 11, **dadurch gekennzeichnet, daß** der Betätigungshebel (6) und der Sperrhebel (9) mit einem gemeinsamen Handgriff (8) in Wirkverbindung stehen, der Sperrhebel (9) innerhalb eines Freilaufwinkels vom Betätigungshebel (6) mit dem Handgriff (8) in eine den Kuppelzapfen (3) aus der Lösestellung freigebende Stellung verschwenkt wird und der Betätigungshebel (6) bei Überschreitung des Freilaufwinkels verschwenkbar ist.

13. Anhängerkupplung mit einem Kupplungsmaul (2), mit einem zwischen einer zurückgezogenen Lösestellung und einer das Kupplungsmaul (2) durchsetzenden Kuppelstellung verschiebbar geführten Kuppelzapfen (3), der von einem Betätigungshebel (6) bewegbar ist, welcher in einem Schwenklager (7) abgestützt ist, in eine seitliche Ausnehmung (5) des Kuppelzapfens (3) eingreift und eine Sperrfläche (23) aufweist, die in der Kuppelstellung den Kuppelzapfen (3) arretierend mit einer am Kuppelzapfen (3) vorgesehenen Anlagefläche (25) zusammenwirkt, und mit einem Sicherungsbolzen (30), der zwischen einer den Kuppelzapfen (3) in dessen Kuppelstellung übergreifenden Sicherungslage und einer diesen freigebenden Entsperrlage quer zur Verschieberichtung (V) des Kuppelzapfens (3) verschiebbar im Kupplungskopf (4) gehalten ist, wobei der Sicherungsbolzen (30) von einer Feder (35) in Richtung der Sicherungslage vorgespannt und vom Betätigungshebel (6) in die Entsperrlage drückbar ist, bevor dieser den Kuppelzapfen (3) verschiebt, **dadurch gekennzeichnet, daß** der Betätigungshebel (6) bei dessen Verstellung den Sicherungsbolzen (30) entlang einer gekrümmten Führungslinie (43) erfaßt, die zwischen der Sicherungslage und der Entsperrlage einen Wendepunkt (44) aufweist, bei dem der Winkel (β) zwischen der Führungslinie (43) und der Verstellrichtung (45) des Betätigungshebels (6) ein Maximum annimmt.

14. Anhängerkupplung nach Anspruch 13, **dadurch gekennzeichnet, daß** der Kuppelzapfen (3) eine Schräg- oder Konusfläche (38) aufweist, die in der Entsperrlage des Sicherungsbolzens (30) diesen erfaßt und entgegen der Federkraft zurückdrückt.

15. Anhängerkupplung nach Anspruch 13 oder 14, **dadurch gekennzeichnet, daß** der Sicherungsbolzen (30) eine zentrale Rundung (32) aufweist, in deren Zentrum die Führungslinie (43) parallel zur Verschieberichtung (45) des Betätigungshebels (6) verläuft.

16. Anhängerkupplung nach mindestens einem der Ansprüche 13 bis 15, **dadurch gekennzeichnet, daß** der Sicherungsbolzen (30) rotationssymmetrisch ausgebildet ist.

17. Anhängerkupplung nach mindestens einem der Ansprüche 13 bis 16, **dadurch gekennzeichnet, daß** der Sicherungsbolzen (30) eine im wesentlichen quer zur Verschieberichtung (V) des Kuppelzapfens (3) ausgerichtete Sperrfläche (36) aufweist, die in der Sperrlage den Kuppelzapfen (3) übergreift.

18. Anhängerkupplung nach mindestens einem der Ansprüche 13 bis 17, **dadurch gekennzeichnet, daß** die Anlagefläche des Betätigungshebels (6) am Sicherungsbolzen (30) als Fase (42) oder Rundung (50) ausgebildet ist.

19. Anhängerkupplung nach mindestens einem der Ansprüche 13 bis 17, **dadurch gekennzeichnet, daß** der Betätigungshebel (6) mindestens eine den Sicherungsbolzen (30) erfassende, drehbare Rolle (52) aufweist.

20. Anhängerkupplung nach mindestens einem der Ansprüche 13 bis 19, **dadurch gekennzeichnet, daß** der Betätigungshebel (6) im Anlagebereich am Sicherungsbolzen (30) an diesen angepaßt, insbesondere kreisbogenförmig ausgebildet ist.

21. Anhängerkupplung nach mindestens einem der Ansprüche 13 bis 20, **dadurch gekennzeichnet, daß** der Betätigungshebel (6) einen den Kuppelzapfen (3) übergreifenden Arm (31) aufweist, an dem die Anlagefläche für den Sicherungsbolzen (30) vorgesehen ist.

## Claims

1. Trailer coupling with a coupling mouth (2) and a coupling pin (3) which is guided displaceably between a retracted release position and a coupling position passing through the coupling mouth (2) and which can be moved by an actuating lever (6), which is supported in a pivot bearing (7), engages in a lateral recess (5) of the coupling pin (3) and has a blocking surface (23) which, in the coupling position, interacts with a bearing surface (25), which is provided on the coupling pin (3), in a manner locking the coupling pin (3), **characterized in that** the actuating lever (6) has a further blocking surface (22) which, in the coupling position, interacts with a bearing surface (24), which is provided on the other side of the recess (5) on the coupling pin (3), in a manner retaining the coupling pin (3), the blocking surfaces (22, 23) being orientated essentially tangentially to the pivot bearing (7) of the actuating lever (6) and, in the coupling position, an imaginary line (L) between the pivot bearing (7) of the actuating lever (6) and the blocking surface (22, 23) thereof enclosing an obtuse angle (α) with the coupling pin (3).

2. Trailer coupling according to Claim 1, **characterized in that** those bearing surfaces (24, 25) of the coupling pin (3) which interact with the blocking surfaces (22, 23) in the coupling position are orientated essentially tangentially to the pivot bearing (7) of the actuating lever (6).

3. Trailer coupling according to Claim 1 or 2, **characterized in that** the blocking surfaces (22, 23) and/or the bearing surfaces (24, 25) are at different spacing from the pivot bearing (7) of the actuating lever (6).

4. Trailer coupling according to at least one of Claims 1 to 3, **characterized in that** the actuating lever (6) has a cutout (28) in which a region (29) on the other side of the lateral recess (5) of the coupling pin (3) engages when the coupling pin is displaced.

5. Trailer coupling according to at least one of Claims 1 to 4, **characterized in that** the actuating lever (6) is assigned a pivotably mounted blocking lever (9) which, in the release position, locks the coupling pin (3) directly and indirectly via the actuating lever (6).

6. Trailer coupling according to Claim 5, **characterized in that** the blocking lever (9) has a supporting cam (12) which retains the actuating lever (6) in the release position of the coupling pin (3).

7. Trailer coupling according to Claim 5 or 6, **characterized in that** the blocking lever (9) has an arm (15) protruding into the coupling mouth (2) and can be pivoted by a coupling eye (20) penetrating therein, and, in the process, cancels the direct and indirect locking of the coupling pin (3).

8. Trailer coupling according to at least one of Claims 5 to 7, **characterized in that** the coupling pin (3) has a notch (16) in which the blocking lever engages in order to lock the coupling pin (3) in its release position.

9. Trailer coupling according to at least one of Claims 5 to 8, **characterized in that** the blocking lever (9) in a blocking position interacts with one of the bearing surfaces (24, 25) of the coupling pin (3) in the coupling position thereof.

10. Trailer coupling according to Claim 9, **characterized in that** the blocking lever (9) can be fixed in the blocking position.

11. Trailer coupling according to at least one of Claims 5 to 10, **characterized in that** the actuating lever (6) and the blocking lever (9) can be positively adjusted.

12. Trailer coupling according to Claim 11, **characterized in that** the actuating lever (6) and the blocking lever (9) are in operative connection with a common handle (8), the blocking lever (9) is pivoted within a freewheeling angle by the actuating lever (6) together with the handle (8) into a position releasing the coupling pin (3) from the release position, and the actuating lever (6) can be pivoted when the freewheeling angle is exceeded.

13. Trailer coupling having a coupling mouth (2), having a coupling pin (3) which is guided displaceably between a retracted release position and a coupling position passing to the coupling mouth (2) and can be moved by an actuating lever (6), which is supported in a pivot bearing (7), engages in a lateral recess (5) of the coupling pin (3) and has a blocking surface (23) which, in the coupling position, interacts with a bearing surface (25), which is provided on the coupling pin (V), in a manner retaining the coupling pin (3), and having a securing bolt (30) which is held in the coupling head (4) in a manner such that it can be displaced transversely with respect to the displacement direction (V) of the coupling pin (3) between a securing position which engages over the coupling pin (3) in the coupling position thereof and an unlocking position which releases the said coupling pin, the securing bolt (30) being prestressed in the direction of the securing position by a spring (35) and being pressable into the unblocking position by the actuating lever (6) before the latter displaces the coupling pin (3), **characterized in that**, during the adjustment of the actuating lever (6), it grasps the securing bolt (30) along a curved guide line (43) which has a turning point (44) between the securing position and the unblocking position, at which point the angle (β) between the guide line (43) and the adjusting device (45) of the actuating lever (6) is at a maximum.

14. Trailer coupling according to Claim 13, **characterized in that** the coupling pin (3) has an oblique or conical surface (38) which, in the unblocking position of the securing bolt (30), grasps the latter and pushes it back counter to the spring force.

15. Trailer coupling according to Claim 13 or 14, **characterized in that** the securing bolt (30) has a central rounding (32), in the centre of which the guide line (43) runs parallel to the displacement direction (45) of the actuating lever (6).

16. Trailer coupling according to at least one of Claims 13 to 15, **characterized in that** the securing bolt (30) is of rotationally symmetrical design.

17. Trailer coupling according to at least one of Claims 13 to 16, **characterized in that** the securing bolt (30) has a blocking surface (36) which is orientated essentially transversely with respect to the displacement direction (V) of the coupling pin (3) and engages over the coupling pin (3) in the blocking position.

18. Trailer coupling according to at least one of Claims 13 to 17, **characterized in that** the bearing surface of the actuating lever (6) on the securing bolt (30) is designed as a bevel (42) or rounding (50) .

19. Trailer coupling according to at least one of Claims 13 to 17, **characterized in that** the actuating lever (6) has at least one rotatable roller (52) which grasps the securing bolt (30).

20. Trailer coupling according to at least one of Claims 13 to 19, **characterized in that** the actuating lever (6) matches the securing bolt (30) in the bearing region on it and in particular is designed in the shape of a circular arc.

21. Trailer coupling according to at least one of Claims 13 to 20, **characterized in that** the actuating lever (6) has an arm (31) which engages over the coupling pin (3) and on which the bearing surface of the securing bolt (30) is provided.

## Revendications

1. Attelage de remorque comportant une entrée d'attache (2) et une goupille d'attache (3) guidée en étant capable de coulisser entre une position de détachement rentrée et une position d'attache traversant l'entrée d'attache (2) qui peut être déplacée par un levier d'actionnement (6), lequel est supporté par un palier pivotant (7), vient en prise dans un évidement (5) latéral de la goupille d'attache (3) et présente une surface de blocage (23) qui coopère avec une surface d'appui (25) prévue sur la goupille d'attache (3) en bloquant la goupille d'attache (3) dans la position d'attache, **caractérisé en ce que** le levier d'actionnement (6) présente une autre surface de blocage (22) qui coopère avec une surface d'appui (24) prévue sur l'autre côté de l'évidement (5) sur la goupille d'attache (3), en bloquant la goupille d'attache (3) dans la position d'attache, les surfaces de blocage (22, 23) étant orientées de manière sensiblement tangentielle par rapport au palier pivotant (7) du levier d'actionnement (6) et, une ligne imaginaire (L) formant entre le palier pivotant (7) du levier d'actionnement (6) et sa surface de blocage (22, 23) avec la goupille d'attache (3) un angle obtus (α) dans la position d'attache.

2. Attelage de remorque selon la revendication 1, **caractérisé en ce que**, dans la position d'attache, les surfaces d'appui (24, 25) de la goupille d'attache (3) coopérant avec les surfaces de blocage (22, 23) sont orientées de manière sensiblement tangentielle par rapport au palier pivotant (7) du levier d'actionnement (6).

3. Attelage de remorque selon la revendication 1 ou 2, **caractérisé en ce que** les surfaces de blocage (22, 23) et/ou les surfaces d'appui (24, 25) sont diversement distantes du palier pivotant (7) du levier d'actionnement (6).

4. Attelage de remorque selon au moins l'une des revendications 1 à 3, **caractérisé en ce que** le levier d'actionnement (6) présente une découpe (28) dans laquelle une zone (29) au-delà de l'évidement (5) latéral de la goupille d'attache (3) vient en prise lors de son coulissement.

5. Attelage de remorque selon au moins l'une des revendications 1 à 4, **caractérisé en ce qu'**au levier d'actionnement (6) est associé un levier de blocage (9) maintenu en étant capable de pivoter qui, dans la position de détachement, verrouille la goupille d'attache (3) directement et indirectement par l'intermédiaire du levier d'actionnement (6).

6. Attelage de remorque selon la revendication 5, **caractérisé en ce que** le levier de blocage (9) présente une came d'appui (12) qui bloque le levier d'actionnement (6) dans la position de détachement de la goupille d'attache (3).

7. Attelage de remorque selon la revendication 5 ou 6, **caractérisé en ce que** le levier de blocage (9) présente un bras (15) pénétrant dans l'entrée d'attache (2) et peut pivoter par l'action d'un oeillet d'attache (20) pénétrant dedans et ce faisant, lève le verrouillage direct et indirect de la goupille d'attache (3).

8. Attelage de remorque selon au moins l'une des revendications 5 à 7, **caractérisé en ce que** la goupille d'attache (3) présente une encoche (16), dans laquelle le levier de blocage vient en prise pour verrouiller la goupille d'attache (3) dans sa position de détachement.

9. Attelage de remorque selon au moins l'une des revendications 5 à 8, **caractérisé en ce que** le levier de blocage (9) dans une position de blocage coopère avec l'une des surfaces d'appui (24, 25) de la goupille d'attache (3) dans sa position d'attache.

10. Attelage de remorque la revendication 9, **caractérisé en ce que** le levier de blocage (9) peut être immobilisé dans la position de blocage.

11. Attelage de remorque selon au moins l'une des revendications 5 à 10, **caractérisé en ce que** le levier d'actionnement (6) et le levier de blocage (9) peut être déplacé par force.

12. Attelage de remorque selon la revendication 11, **caractérisé en ce que** le levier d'actionnement (6) et le levier de blocage (9) sont en liaison de coopération par l'intermédiaire d'une poignée (8) commune, le levier de blocage (9) pivote à l'intérieur d'un angle de course libre, sous l'effet du levier d'actionnement (6) avec la poignée (8) dans une position libérant la goupille d'attache (3) de la position de détachement et le levier d'actionnement (6) peut pivoter lorsque est franchi l'angle de course libre.

13. Attelage de remorque présentant une entrée d'attache (2) et une goupille d'attache (3) guidée en étant capable de coulisser entre une position de détachement rentrée et une position d'attache traversant l'entrée d'attache (2), qui peut être déplacée par un levier d'actionnement (6), lequel est supporté par un palier pivotant (7), vient en prise dans un évidement (5) de la goupille d'attache (3) et présente une surface de blocage (23), qui coopère avec une surface d'appui (25) en bloquant la goupille d'attache (3) dans la position d'attache et présentant un goujon de fixation (30) qui est maintenu capable de coulisser transversalement à la direction de coulissement (V) de la goupille d'attache (3) dans la tête d'attache (4) entre une position de fixation dépassant la goupille d'attache (3) dans sa position d'attache et une position de déblocage libérant celle-ci, le goujon de fixation (30) étant précontraint par un ressort (35) dans la direction de la position de fixation et pouvant être pressé par le levier d'actionnement (6) dans la position de déblocage, avant que celui-ci ne fasse coulisser la goupille d'attache (3), **caractérisé en ce que** le levier d'actionnement (6) lors de son déplacement saisit le goujon de fixation (30) le long d'une ligne de guidage (43) courbe qui présente entre une position de fixation et la position de déblocage un point d'inflexion (44) au niveau duquel l'angle (β) entre la ligne de guidage (43) et la direction de déplacement (45) du levier d'actionnement (6) prend une valeur maximale.

14. Attelage de remorque la revendication 13, **caractérisé en ce que** la goupille d'attache (3) présente une surface (38) oblique ou conique qui dans la position de déblocage du goujon de fixation (30) saisit celui-ci et le repousse en opposition à la force de ressort.

15. Attelage de remorque selon la revendication 13 ou 14, **caractérisé en ce. que** le goujon de fixation (30) présente un arrondi central (32) au centre duquel la ligne de guidage (43) s'étend parallèlement à la direction de déplacement (45) du levier d'actionnement (6).

16. Attelage de remorque selon au moins l'une des revendications 13 à 15, **caractérisé en ce que** le goujon de fixation (30) est réalisé à symétrie de révolution.

17. Attelage de remorque selon au moins l'une des revendications 13 à 16, **caractérisé en ce que** le goujon de fixation (30) présente une surface de blocage (36), orientée sensiblement perpendiculairement par rapport à la direction de coulissement (V) de la goupille d'attache (3), qui dans la position de blocage recouvre la goupille d'attache (3).

18. Attelage de remorque selon au moins l'une des revendications 13 à 17, **caractérisé en ce que** la surface d'appui du levier d'actionnement (6) sur le goujon de fixation (30) est réalisée en chanfrein (42) ou en arrondi (50).

19. Attelage de remorque selon au moins l'une des revendications 13 à 17, **caractérisé en ce que** le levier d'actionnement (6) présente au moins un rouleau (52) rotatif, saisissant le goujon de fixation (30).

20. Attelage de remorque selon au moins l'une des revendications 13 à 19, **caractérisé en ce que** le levier d'actionnement (6) dans la zone d'appui sur le goujon de fixation (30) est réalisé adapté à celui-ci, en particulier en forme d'arc de cercle.

21. Attelage de remorque selon au moins l'une des revendications 13 à 20, **caractérisé en ce que** le levier d'actionnement (6) présente un bras (31) recouvrant la goupille d'attache (3), sur lequel est prévue la surface d'appui pour le goujon de fixation (30).
